# EUROPÄISCHE PATENTSCHRIFT

(11) **EP 2 433 036 B1**
(45) Veröffentlichungstag und Bekanntmachung des Hinweises auf die Patenterteilung: **28.12.2016**
(21) Anmeldenummer: 10721670.7
(22) Anmeldetag: 04.05.2010
(51) Int. Cl.: F02B 37/18, F16J 15/3204, F16J 15/3228, F16J 15/3284, F16J 15/34, F16J 15/52

(54) **DREHDURCHFÜHRUNG MIT GERINGER GASDURCHLÄSSIGKEIT**
ROTARY FEED-THROUGH WITH GAS PERMEABILITY
PASSAGE ROTATIF AVEC PERMÉABILITÉ AU GAZ RÉDUITE

(30) Priorität: 20.05.2009 DE 102009022109
(43) Veröffentlichungstag der Anmeldung: 28.03.2012
(73) Patentinhaber: ElringKlinger AG, 72581 Dettingen/Erms (DE)
(72) Erfinder: NUSSKO, Marina, 68167 Mannheim (DE); FEIGL, Peter, 82335 Höhenrain (DE); VOGT, Christian, 82057 lcking (DE); SIMON, Clemens, 82362 Weilheim (DE); BRENNDÖRFER, Reinhard, 82538 Geretsried (DE); NAHRWOLD, Olaf, 67063 Ludwigshafen (DE); LANZINER, Arthur, 69469 Weinheim (DE); MEINCKE, Michael, 82515 Wolfratshausen (DE); CURTH, Christian, 82377 Penzberg (DE); SPREIDLER, Dieter, 82393 Iffeldorf (DE); LEDERER, Andreas, 80637 München (DE)
(74) Vertreter: Hoeger, Stellrecht & Partner Patentanwälte mbB
(86) Internationale Anmeldenummer: PCT/EP2010/002732
(87) Internationale Veröffentlichungsnummer: WO 2010/133293

(56) Entgegenhaltungen:
- WO-A1-2005/008041
- DE-B1- 2 526 182
- DE-C1- 3 432 852
- GB-A- 899 719
- US-A- 3 460 842
- US-A- 4 212 474

## Beschreibung

### Technisches Gebiet

Die Erfindung betrifft eine Drehdurchführung, umfassend eine Verstellwelle, welcher mit einer Betätigungseinrichtung kraftübertragend verbindbar ist.

### Stand der Technik

Aus der WO 2005/008041 A1 ist eine Drehdurchführung der eingangs genannten Art bekannt, die zur Betätigung einer Wastegateklappe dient. In einem Turbolader werden Abgase verwendet, um ein Turbinenrad anzutreiben. Die Rotationsgeschwindigkeit des Turbinenrads kann kontrolliert werden, indem sogenannte Wastegateklappen geöffnet werden, so dass Abgase entweichen. Das Entweichen der Abgase führt zu einem Druckverlust innerhalb eines Raums, in dem das Turbinenrad rotiert. Die Temperatur der entweichenden Abgase kann über 1000°C betragen. Sie werden in einem weiteren Raum gesammelt, um einer Abgasbehandlung unterworfen zu werden.

Bei der Verwendung von Wastegateklappen ist stets dafür Sorge zu tragen, dass keine Abgase durch Spalte zwischen der Verstellwelle und dem Lager entweichen. Hierzu schlägt die WO 2005/008041 A1 vor, an der kälteren Seite der Verstellwelle ein Federelement anzuordnen, welches Spaltbildung und Verschleiß einer keramischen Dichtung kompensiert.

Bei der gattungsbildenden Drehdurchführung ist nachteilig, dass eine keramische Dichtung zum Einsatz kommt, welche bei Vibrationen oder Kippbewegungen zur Spaltbildung neigt. Die keramische Dichtung liegt nämlich planparallel an einer ebenen Dichtfläche an, wobei die Dichtung bei auftretenden Vibrationen in ihrer Gesamtheit relativ zur Dichtfläche bewegt wird und dadurch Spalte erzeugt.

Um dem zu begegnen, muss die keramische Dichtung durch das Federelement dauerhaft sehr stark gegen die Welle gepresst werden. Hiermit geht eine Abnutzung der Dichtung und eine Schwergängigkeit der Verstellwelle einher. Insbesondere muss bei der Fertigung der gattungsbildenden Drehdurchführung dafür Sorge getragen werden, dass die Federkraft stets ausreichend ist, um den jeweiligen Abnutzungsgrad der keramischen Dichtung und die Spaltbildung geeignet auszugleichen. Zudem werden bei einer einzelnen scheibenförmigen keramischen Dichtung sehr hohe Anforderungen an die Oberflächengüte und damit an die Fertigungsgenauigkeit gestellt, da selbst durch kleinste Spalte oder Unebenheiten sehr viel Gas entweichen kann.

### Darstellung der Erfindung

Der Erfindung liegt daher die Aufgabe zugrunde, eine Drehdurchführung der eingangs genannten Art derart auszugestalten und weiterzubilden, dass diese bei einfachem Aufbau eine dauerhaft hohe Dichtheit gegen Abgase zeigt.

Die vorliegende Erfindung löst die zuvor genannte Aufgabe durch die Merkmale des Patentanspruchs 1.

Danach ist eine Drehdurchführung der eingangs genannten Art durch eine Dichteinrichtung gekennzeichnet.

Die Dichteinrichtung weist erfindungsgemäß eine Glimmerdichtung auf. Glimmer ist dauerhaft temperaturstabil und korrosionsstabil.

Erfindungsgemäß ist erkannt worden, dass die Dichteinrichtung gemäß Anspruch 1 die Größe eines Spaltes minimiert, welcher zwischen einer Verstellwelle und einem Lager oder zwischen der Verstellwelle und weiteren Einrichtungen auftreten kann.

Folglich ist die eingangs genannte Aufgabe gelöst.

Die Dichteinrichtung kann selbstdichtend wirken und selbstständig Spalte verringern. Es besteht nämlich eine Proportionalität zwischen der Leckagerate (Liter/sec) und dem Produkt aus der dritten Potenz der Spaltbreite und der Druckdifferenz zwischen den gegeneinander abzudichtenden Räumen. Eine Verkleinerung der Spaltbreite reduziert daher die Leckagerate sehr viel mehr, als eine Verminderung der Druckdifferenz.

Eine Dichteinrichtung könnte einen Federring aufweisen, welcher in radialer Richtung eine Presskraft ausübt und dadurch eine Dichtwirkung in axialer Richtung entfaltet. Somit ist auf engem Bauraum eine Kraftumlenkung ermöglicht.

Die Dichteinrichtung könnte eine Lamellendichtung aufweisen. Die Lamellen liegen an der Umfangsfläche der Verstellwelle dichtend an und sind in axialer Richtung verpressbar.

Die Dichteinrichtung könnte als Radialwellendichtring mit einer metallischen Dichtlippe ausgestaltet sein. Die Dichtlippe kann an der Umfangsfläche der Verstellwelle dichtend anliegen. Metallische Dichtungen sind äußerst temperaturstabil.

Erfindungsgemäß weist die Dichteinrichtung ein Anpresselement auf, welches in radialer Richtung eine Presskraft ausübt und dadurch eine Dichtwirkung in axialer Richtung entfaltet. Spalte können hierbei durch axial verpresste Abdichtelemente verschlossen werden.

Die Dichteinrichtung könnte Mikrokugeln aufweisen. Hierdurch wird eine leichtgängige Verstellwelle unter Ausbildung eine Labyrinthdichtung realisiert. Eine Dichteinrichtung könnte zwei Glimmerdichtungen aufweisen. Hierdurch ist eine beidseitige Abdichtung der Verstellwelle möglich.

Zwei Verstellwellenenden könnten mit einem Hebel verbunden sein, an dem eine abdichtende Membran festgelegt, insbesondere angeschweißt ist. Hierdurch werden abzudichtende Räume gegeneinander zuverlässig hermetisch abgedichtet.

Zwei Verstellwellenenden könnten an einer ersten Kugel angelenkt sein, welcher in einer konzentrisch angeordneten, größeren zweiten Kugel gelagert ist. Hierbei wird ein Kugelschalenspalt erzeugt, der sehr eng ausgebildet sein kann und daher eine geringe Leckage erzeugt.

Zwei Verstellwellenenden könnten unter Zwischenlage einer Klemmmembran derart ineinander greifen, dass ein Verstellwellenende das andere Verstellwellenende umgibt. Hierdurch ist eine platzsparende koaxiale Anordnung der Verstellwellenenden ermöglicht.

Die hier beschriebene Drehdurchführung wird zur Betätigung von Wastegateklappen verwendet. Hierdurch ist eine sehr dichte und stabile Drehdurchführung in einem Turbolader eines Kraftfahrzeugs einsetzbar.

Die Drehdurchführung kann zur Betätigung von Abgasrückführungsklappen oder Abgasklappen verwendet werden. Die Drehdurchführung kann zur Verstellung von variablen Turbinengeometrien (VTG) verwendet werden. Die Drehdurchführung kann in PKWs, LKWs, oder im Kraftwerksbereich verwendet werden.

Es gibt nun verschiedene Möglichkeiten, die Lehre der vorliegenden Erfindung auf vorteilhafte Weise auszugestalten und weiterzubilden. Dazu ist einerseits auf die nachgeordneten Ansprüche, andererseits auf die nachfolgende Erläuterung bevorzugter Ausführungsbeispiele der Erfindung anhand der Zeichnung zu verweisen.

Mit der Erläuterung der bevorzugten Ausführungsbeispiele der Erfindung anhand der Zeichnung werden auch im Allgemeinen bevorzugte Ausgestaltungen und Weiterbildungen der Lehre erläutert.

### Kurzbeschreibung der Zeichnung

In der Zeichnung zeigen
- Fig. 1: eine Drehdurchführung, bei welcher die Dichteinrichtung einen Federring aufweist, welcher in radialer Richtung eine Presskraft ausübt und dadurch eine Dichtwirkung in axialer Richtung entfaltet,
- Fig. 2: eine nicht dem Anspruch 1 unterfallende Drehdurchführung mit einer gekammerten Graphitdichtung,
- Fig. 3: eine nicht dem Anspruch 1 unterfallende Drehdurchführung mit einer einseitig offenen gekammerten Graphitdichtung,
- Fig. 4: eine nicht dem Anspruch 1 unterfallende Drehdurchführung mit einer Lamellendichtung,
- Fig. 5: eine nicht dem Anspruch 1 unterfallende Drehdurchführung mit einer Dichteinrichtung, die als Radialwellendichtring mit einer metallischen Dichtlippe ausgestaltet ist,
- Fig. 6: eine Drehdurchführung mit einer Dichteinrichtung, die Glimmer aufweist,
- Fig. 7: eine nicht dem Anspruch 1 unterfallende Drehdurchführung, bei welcher zwei gezahnte Räder unter Zwischenlage einer dichten Membran in Eingriff stehen,
- Fig. 8: eine Drehdurchführung bei welcher die Dichteinrichtung ein Anpresselement aufweist, welches in radialer Richtung eine Presskraft ausübt und dadurch eine Dichtwirkung in axialer Richtung entfaltet,
- Fig. 9: eine nicht dem Anspruch 1 unterfallende Drehdurchführung mit einer Dichteinrichtung, die Mikrokugeln aufweist,
- Fig. 10: eine nicht dem Anspruch 1 unterfallende Drehdurchführung, bei welcher eine Membran durch einen sehr engen Ringspalt geführt ist,
- Fig. 11: eine nicht dem Anspruch 1 unterfallende Drehdurchführung, bei welcher eine flächige Lage zwischen einem Lager und einer Verstellwelle aufgewickelt vorliegt,
- Fig. 12: eine nicht dem Anspruch 1 unterfallende Drehdurchführung mit einer Dichteinrichtung, die Glimmerdichtungen aufweist, die beidseitig an der Verstellwelle anliegen,
- Fig. 13: eine nicht dem Anspruch 1 unterfallende Drehdurchführung, bei der zwei Verstellwellenenden mit einem Hebel verbunden sind, an dem eine abdichtende Membran festgelegt, insbesondere angeschweisst ist,
- Fig. 14: eine nicht dem Anspruch 1 unterfallende Drehdurchführung, bei welcher zwei Verstellwellenenden an einer Kugel angelenkt sind, welche in einer konzentrisch angeordneten, größeren Kugel gelagert ist,
- Fig. 15: eine nicht dem Anspruch 1 unterfallende Drehdurchführung, bei welcher zwei Verstellwellenenden unter Zwischenlage einer Membran derart ineinander greifen, dass ein Verstellwellenende das andere umgibt,
- Fig. 16: eine nicht dem Anspruch 1 unterfallende Drehdurchführung, bei welcher zwei Verstellwellen durch einen schlaufenförmig gewundenen Riemen miteinander drehübertragend verbunden sind, und
- Fig. 17: eine nicht dem Anspruch 1 unterfallende Drehdurchführung mit einer faltenbalgartigen Dichteinrichtung

### Ausführung der Erfindung

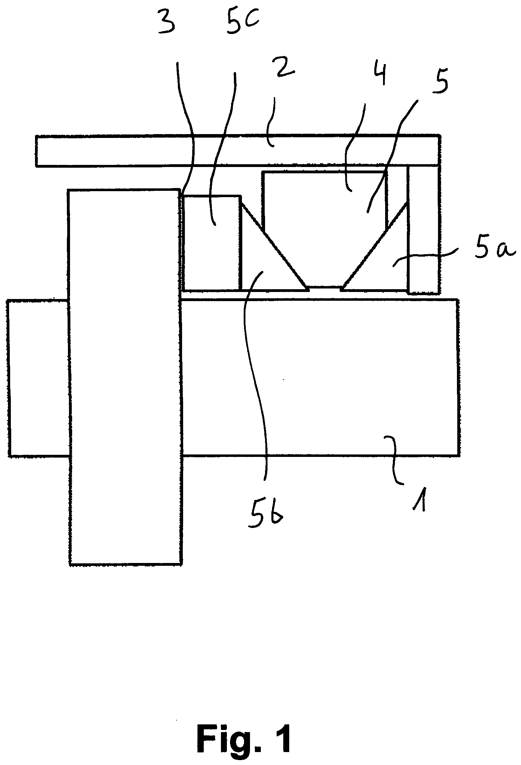

Fig. 1 zeigt eine Drehdurchführung, umfassend eine Verstellwelle 1 welche mit einer nicht gezeigten Betätigungseinreichtung kraftübertragend verbunden ist, wobei die Verstellwelle 1 in einem Lager 2 gelagert ist und wobei zwischen dem Lager 2 und der Verstellwelle 1 mindestens ein abzudichtender Spalt 3 ausgebildet ist. Eine Dichteinrichtung 4 weist einen Federring 5 auf, welcher in radialer Richtung eine Presskraft ausübt und dadurch eine Dichtwirkung in axialer Richtung entfaltet. Der Federring 5 presst die konisch ausgebildeten Dichtelemente 5a, 5b in axialer Richtung gegen Dichtflächen bzw. ein weiteres Dichtelement 5c, indem er in radialer Richtung Kraft ausübt. Das weitere Dichtelement 5c ist aus Keramik oder einem Gleitwerkstoff gefertigt und liegt unmittelbar an der Verstellwelle 1 an. Das weitere Dichtelement 5c kann auch als Beschichtung ausgebildet sein.

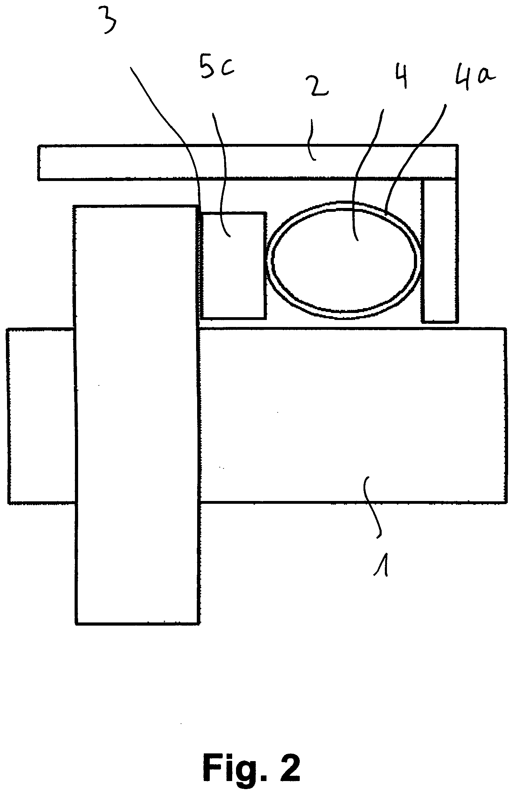

Fig. 2 zeigt eine Drehdurchführung mit einer Dichteinrichtung 4, die als gekammerte Graphitdichtung ausgestaltet ist. Die Graphitdichtung besteht aus Graphit, der von einer Metallfolie 4a umgeben ist. Die Graphitdichtung könnte auch als gewickelte Graphitdichtung ausgebildet sein. Das weitere Dichtelement 5c ist aus einem Gleitwerkstoff gefertigt, kann jedoch auch als Beschichtung ausgebildet sein.

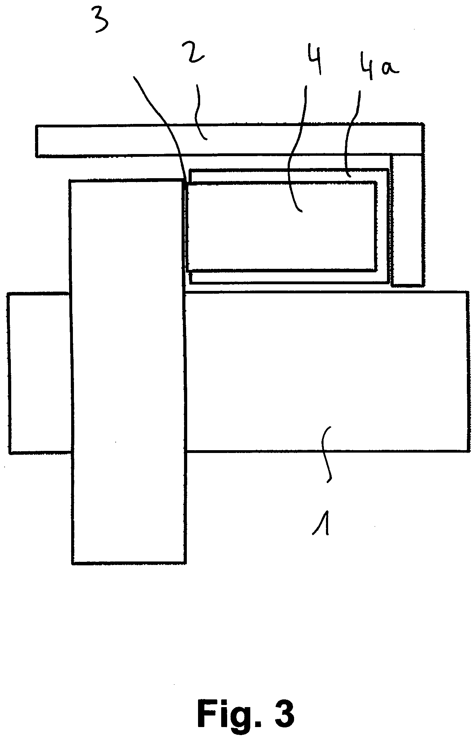

Fig. 3 zeigt eine Drehdurchführung mit einer einseitig offenen gekammerten Graphitdichtung. Die Metallfolie 4a ist am Spalt 3 unterbrochen, so dass der Graphit unmittelbar an der Verstellwelle anliegen kann.

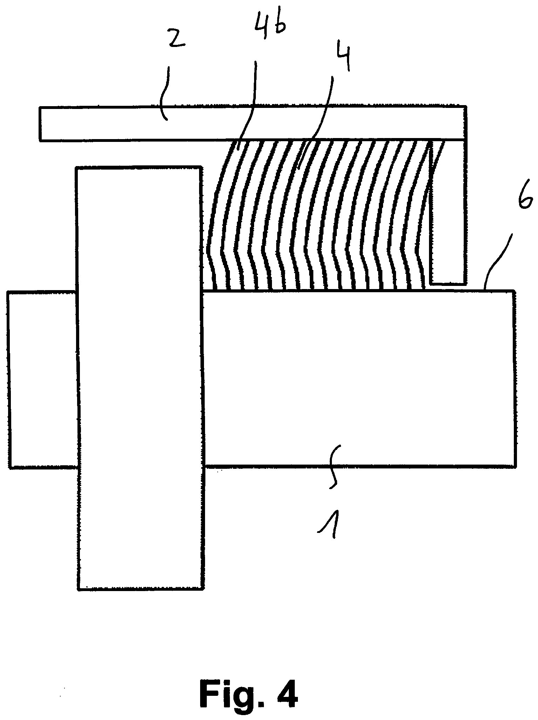

Fig. 4 zeigt eine Drehdurchführung mit einer Lamellendichtung. Die Dichteinrichtung 4 weist Lamellen 4b auf, die in axialer Abfolge angeordnet sind. Die Lamellen 4b liegen an der Umfangsfläche 6 der Verstellwelle 1 dichtend an.

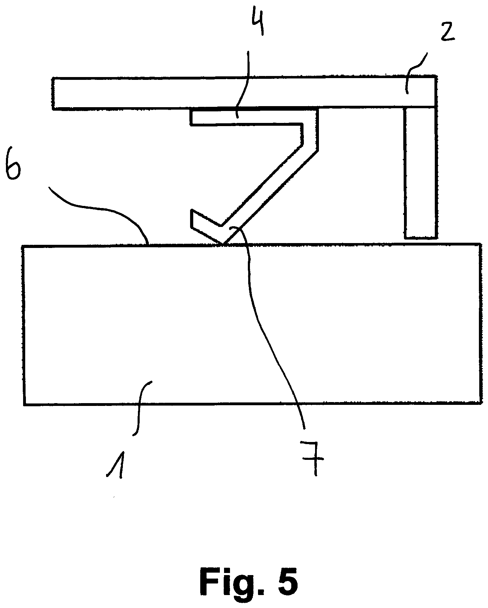

Fig. 5 zeigt eine Drehdurchführung mit einer Dichteinrichtung 4, die als Radialwellendichtring mit einer metallischen Dichtlippe 7 ausgestaltet ist. Die Dichtlippe 7 liegt an der Umfangsfläche 6 der Verstellwelle 1 dichtend an.

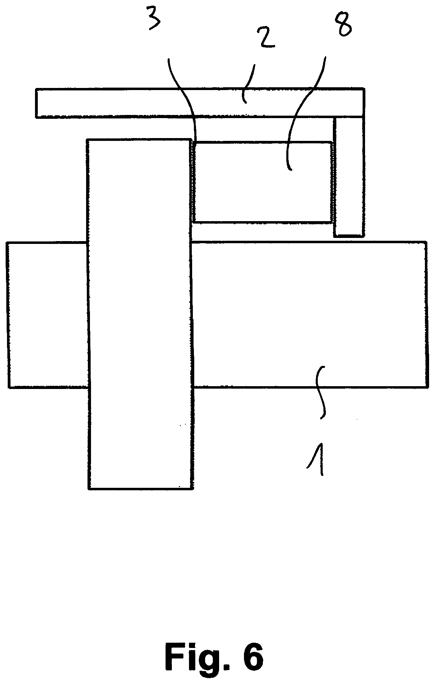

Fig. 6 zeigt eine Drehdurchführung mit einer Dichteinrichtung 4, die eine Glimmerdichtung 8 aufweist. Die Glimmerdichtung 8 liegt unmittelbar an der Verstellwelle 1 im Bereich des Spalts 3 an. Die Glimmerdichtung 8 wird durch die Verstellwelle 1 und das Lager 2 verpresst.

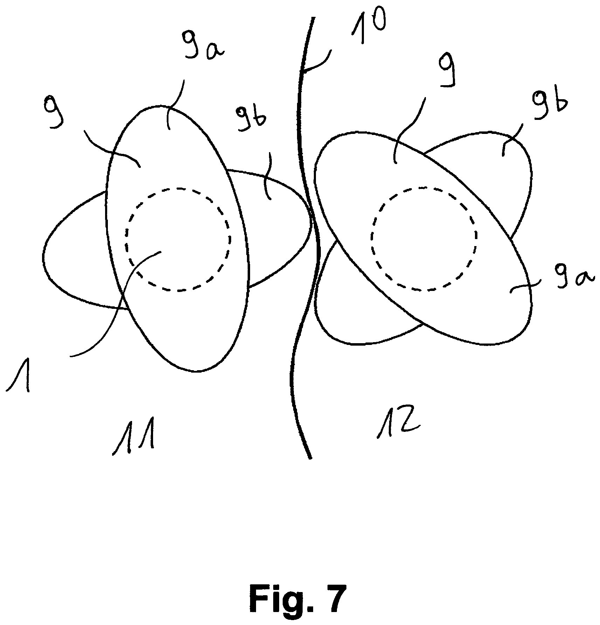

Fig. 7 zeigt eine Drehdurchführung, bei welcher zwei gezahnte Räder 9 unter Zwischenlage einer dichten Membran 10 in Eingriff stehen. Die Räder 9 weisen jeweils Nocken 9a, 9b auf, die die flexible und weiche Membran deformieren, um mit gegenüberliegenden Nocken 9a, 9b in Eingriff zu treten. Hierdurch kann eine Verstellwelle 1 durch eine flexible Membran 10 hindurch betätigt werden, wobei die Membran 10 zwei Räume 11,12 gegeneinander abdichtet.

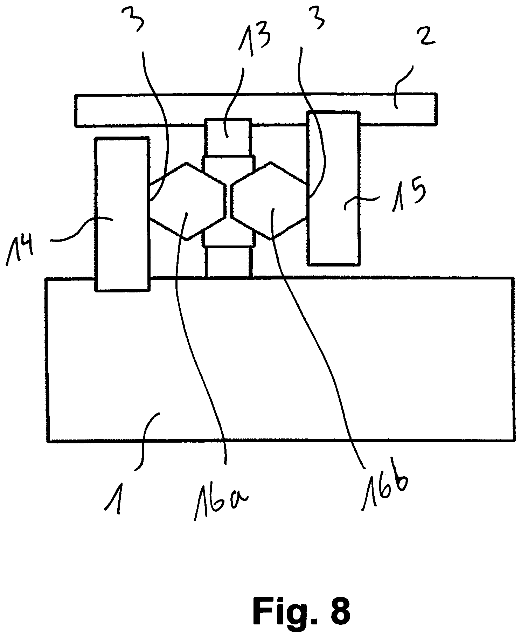

Fig. 8 zeigt eine Drehdurchführung bei welcher die Dichteinrichtung 4 ein Anpresselement 13 aufweist, welches in radialer Richtung eine Presskraft ausübt und dadurch eine Dichtwirkung in axialer Richtung entfaltet. Eine erste Dichtfläche 14 ist drehfest mit der Verstellwelle 1 und eine zweite Dichtfläche 15 drehfest mit dem Lager 2 verbunden. Die Spalte 3 werden durch axial verpresste Abdichtelemente 16a, 16b verschlossen.

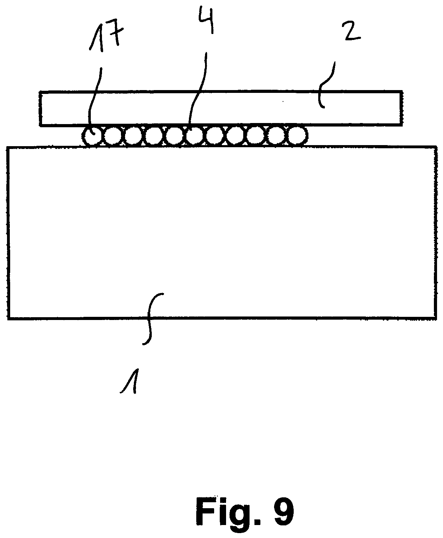

Fig. 9 zeigt eine Drehdurchführung mit einer Dichteinrichtung 4, die Mikrokugeln 17 aufweist.

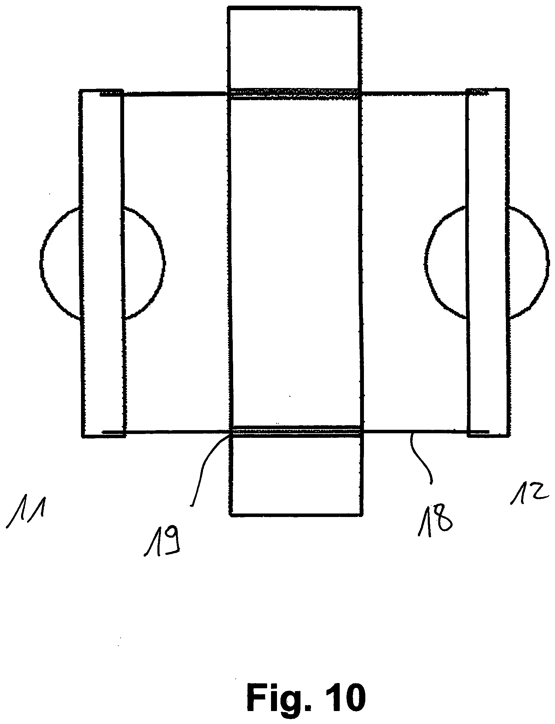

Fig. 10 zeigt eine Drehdurchführung, bei welcher eine zylindrische Membran 18 durch einen sehr engen Ringspalt 19 geführt ist.

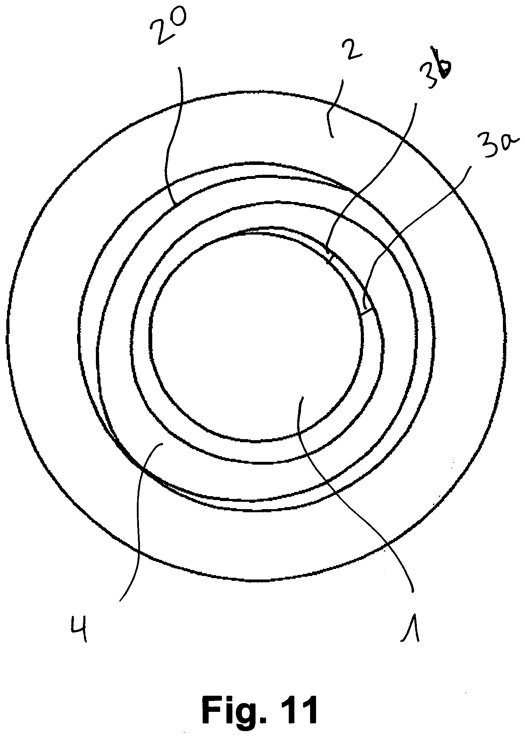

Fig. 11 zeigt eine Drehdurchführung, bei welcher eine flächige Lage 20 zwischen einem Lager 2 und einer Verstellwelle 1 aufgewickelt vorliegt. Durch die Wicklung werden sehr kleine Spalte 3a, 3b erzeugt.

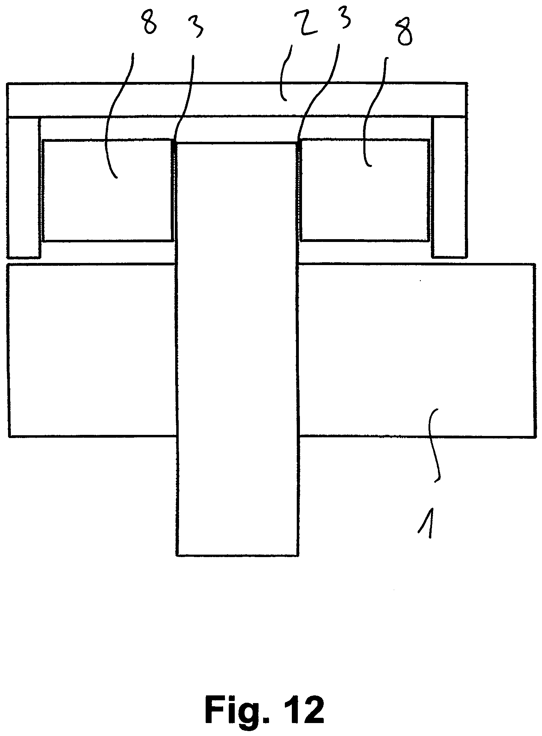

Fig. 12 zeigt eine Drehdurchführung mit einer Dichteinrichtung 4, die zwei Glimmerdichtungen 8 aufweist, die beidseitig an zwei Dichtflächen der Verstellwelle 1 anliegen.

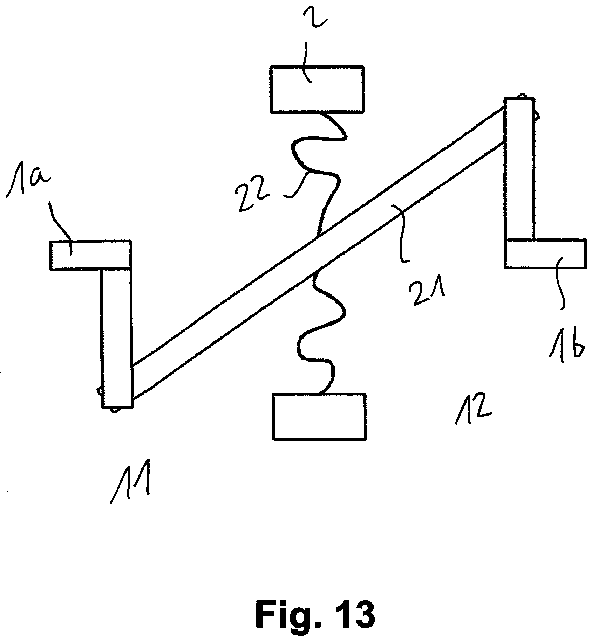

Fig. 13 zeigt eine Drehdurchführung, bei der zwei Verstellwellenenden 1a, 1b mit einem Hebel 21 verbunden sind, an dem eine abdichtende Membran 22 festgelegt, insbesondere angeschweisst ist. Hierdurch werden die abzudichtenden Räume 11,12 gegeneinander zuverlässig abgedichtet.

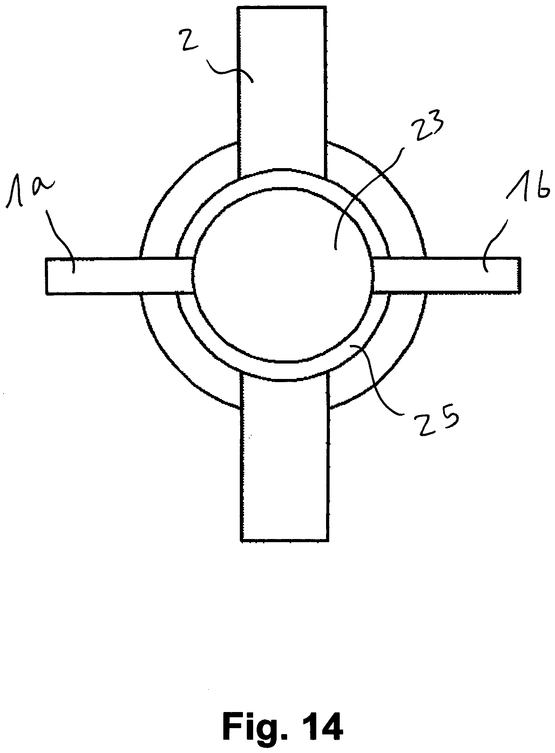

Fig. 14 zeigt eine Drehdurchführung, bei welcher zwei Verstellwellenenden 1a, 1b an einer ersten Kugel 23 angelenkt sind, welche in einer konzentrisch angeordneten, größeren, zweiten Kugel 24 gelagert ist. Hierbei wird ein Kugelschalenspalt 25 erzeugt, der sehr eng ausgebildet sein kann und daher eine geringe Leckage erzeugt.

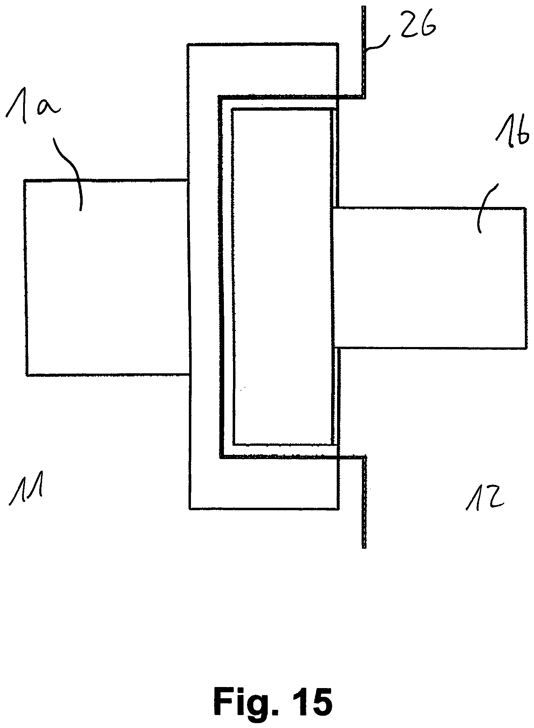

Fig. 15 zeigt eine Drehdurchführung, bei welcher zwei Verstellwellenenden 1a, 1b unter Zwischenlage einer Klemmmembran 26 derart ineinander greifen, dass ein Verstellwellenende 1a, das andere Verstellwellenende 1 b umgibt.

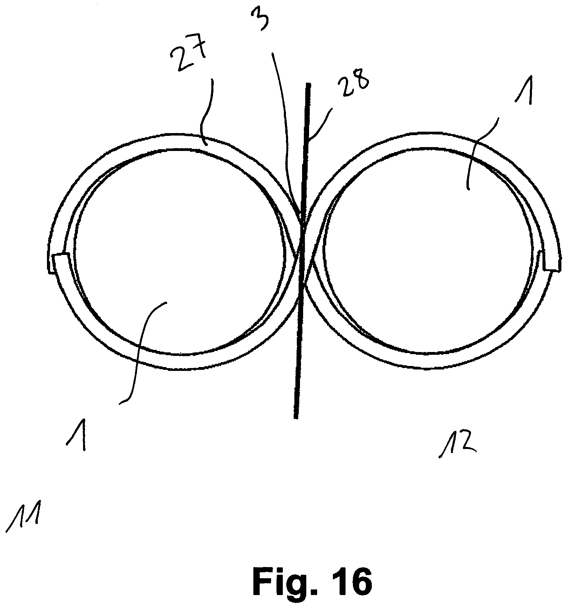

Fig. 16 zeigt eine Drehdurchführung, bei welcher zwei Verstellwellen 1 durch einen schlaufenförmig gewundenen Riemen 27 miteinander drehübertragend verbunden sind. Der Riemen 27 durchgreift eine Wand 28 unter Ausbildung eines engen Spalts 3.

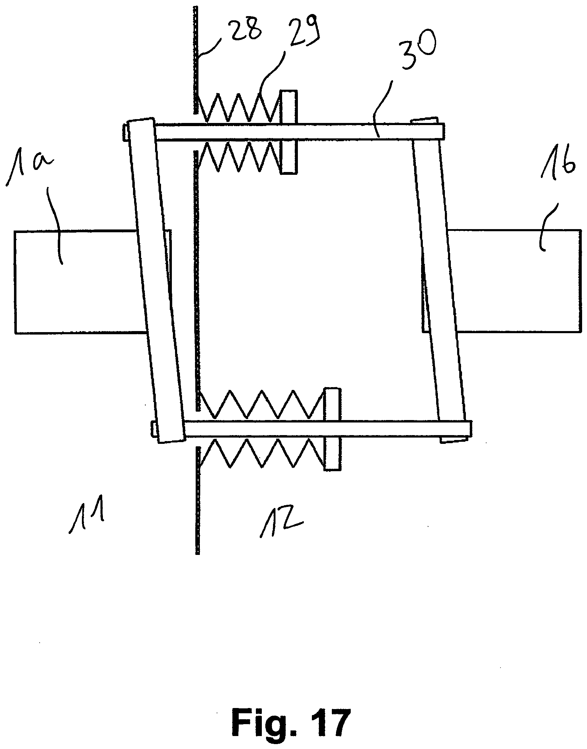

Fig. 17 zeigt eine Drehdurchführung mit einer faltenbalgartigen Dichteinrichtung 29, die an einer Wand 28 dicht angebracht ist. Die faltenbalgartige Dichteinrichtung 29 nimmt ein Gestänge 30 auf, welches zwei Verstellwellenenden 1a, 1b kraftübertragend miteinander verbindet.

Hinsichtlich weiterer vorteilhafter Ausgestaltungen und Weiterbildungen der Erfindungsgemäßen Lehre wird einerseits auf den allgemeinen Teil der Beschreibung und andererseits auf die beigefügten Patentansprüche verwiesen.

Abschließend sei ganz besonders hervorgehoben, dass die zuvor ausgewählten Ausführungsbeispiele lediglich zur Erörterung der erfindungsgemäßen Lehre dienen, diese jedoch nicht auf diese Ausführungsbeispiele einschränkt.

## Patentansprüche

1. Drehdurchführung, für eine Wastegateklappe eines Turboladers, umfassend eine Verstellwelle (1), welche mit einer Betätigungseinrichtung kraftübertragend verbunden ist, mit einer Dichteinrichtung (4), die gegen Abgase abdichtet und, **dadurch gekennzeichnet, dass** die Dichteinrichtung (4) als Glimmerdichtung (8) ausgestaltet ist, und dass die Dichteinrichtung (4) ein Anpresselement (13) aufweist, welches in radialer Richtung eine Presskraft ausübt und dadurch eine Dichtwirkung in axialer Richtung entfaltet.

2. Drehdurchführung nach Anspruch 1, **dadurch gekennzeichnet, dass** die Dichteinrichtung (4) einen Federring (5) aufweist, der in radialer Richtung eine Presskraft ausübt und dadurch eine Dichtwirkung in axialer Richtung entfaltet.

3. Drehdurchführung nach Anspruch 1, **dadurch gekennzeichnet, dass** die Dichteinrichtung (4) zwei Glimmerdichtungen (8) aufweist.

## Claims

1. Rotary feed-through for a wastegate valve of a turbocharger, comprising an adjusting shaft (1) connected to an actuating device for the purpose of force transmission and a sealing device (4) sealed against exhaust gases,
**characterized in that** the sealing device (4) is designed as a mica seal (8) and that the sealing device (4) has a contact element (13) exerting a pressing force in a radial direction and thereby developing a sealing effect in an axial direction.

2. Rotary feed-through as defined in claim 1, **characterized in that** the sealing device (4) has a snap ring (5) exerting a pressing force in a radial direction and thereby developing a sealing effect in an axial direction.

3. Rotary feed-through as defined in claim 1, **characterized in that** the sealing device (4) has two mica seals (8).

## Revendications

1. Passage tournant, destiné à un clapet de décharge d'un turbocompresseur, comprenant un arbre de réglage (1), lequel est relié à un dispositif d'actionnement de manière à induire une transmission de force, comprenant un dispositif d'étanchéité (4), qui assure une étanchéité par rapport aux gaz d'échappement, **caractérisé en ce que** le dispositif d'étanchéité (4) est réalisé sous la forme d'un joint en mica (8), et **en ce que** le dispositif d'étanchéité (4) comprend un élément de pression (13), lequel exerce une force de pression dans la direction radiale et produit ainsi un effet d'étanchéité dans la direction axiale.

2. Passage tournant selon la revendication 1, **caractérisé en ce que** le dispositif d'étanchéité (4) comprend une rondelle élastique (5), qui exerce une force de pression dans la direction radiale et produit ainsi un effet d'étanchéité dans la direction axiale.

3. Passage tournant selon la revendication 1, **caractérisé en ce que** le dispositif d'étanchéité (4) comprend deux joints en mica (8).
